# EUROPÄISCHE PATENTSCHRIFT

(11) **EP 1 492 640 B1**
(45) Veröffentlichungstag und Bekanntmachung des Hinweises auf die Patenterteilung: **02.12.2009**
(21) Anmeldenummer: 03745761.1
(22) Anmeldetag: 06.03.2003
(51) Int. Cl.: B23D 31/00

(54) **VORRICHTUNG ZUM AUFBRINGEN EINER ARBEITSKRAFT AUF EIN WERKSTÜCK**
METHOD FOR APPLYING A WORKING FORCE TO A WORKPIECE
DISPOSITIF POUR APPLIQUER UNE FORCE DE TRAVAIL A UNE PIECE A USINER

(30) Priorität: 11.04.2002 DE 10215952
(43) Veröffentlichungstag der Anmeldung: 05.01.2005
(73) Patentinhaber: Alfing Kessler Sondermaschinen GmbH, 73433 Aalen (DE)
(72) Erfinder: WISNIEWSKI, Horst, 73433 Aalen (DE)
(74) Vertreter: HOFFMANN EITLE
(86) Internationale Anmeldenummer: PCT/EP2003/002320
(87) Internationale Veröffentlichungsnummer: WO 2003/084704

(56) Entgegenhaltungen:
- EP-A- 0 661 125
- DE-A- 19 624 385
- DE-U- 9 210 167
- US-A- 4 754 906

## Beschreibung

### Gebiet der Erfindung

Die Erfindung betrifft eine Vorrichtung zum Aufbringen einer Arbeitskraft auf ein Werkstück, um das Werkstück herzustellen oder zu bearbeiten.

### Stand der Technik

In der Technik sind Vorrichtungen gut bekannt, die aus einer Kolben-Zylinder-Einheit mit einem Arbeitszylinder, sowie mit einem Arbeitskolben bestehen. Der Arbeitskolben teilt dabei den Arbeitszylinder in eine Betätigungs-und Rückführungskammer. Bekannt ist, dass sowohl die Betätigungskammer, als auch die Rückführungskammer mit einem Hydraulikmedium beaufschlagbar sind. Die Arbeitskraft wird dabei durch ein Zusammenwirken zwischen dem Arbeitskolben und einer Kraftübertragungseinrichtung auf das Werkstück übertragen.

Das europäische Patent EP 066 11 25 beschreibt eine Vorrichtung zum Bruchtrennen von Pleueln mit den Merkmalen des Oberbegriffs von Anspruch 1. Eine derartige Vorrichtung umfasst unter Anderem eine Betätigungseinrichtung zum Aufbringen einer Spreizkraft auf den Spreizkeil und damit auf das Werkstück (Pleuel) mittels einer hydraulischen Kolben-Zylinder-Einheit. Zusätzlich umfasst die Betätigungseinrichtung einen Kraftspeicher, sowie ein zwischen dem Kraftspeicher und der Kolben-Zylinder-Einheit angeordnetes Steuerventil, über das im Kraftspeicher unter Druck gespeichertes Hydraulikmedium schlagartig in die Kolbenzylindereinheit einspeisbar ist. Um eine Arbeitskraft auf das Werkstück (Pleuel) zu übertragen wird das Hydraulikmedium in die Betätigungskammer eingespeist und zugleich das sich in der Rückführungskammer befindliche Hydraulikmedium verdrängt. Zum Rückstellen der Vorrichtung in seine Ausgangsstellung wird dieser Vorgang umgekehrt, d. h. die Rückführungskammer wird mit Hydraulikmedium gespeist und gleichzeitig wird das Hydraulikmedium aus der Betätigungskammer verdrängt.

Es ist bekannt, dass die Qualität von Bruchtrennergebnissen beim Bruchtrennen von Pleueln unter Anderem von der Geschwindigkeit des Trennvorganges abhängt. Aus diesem Grund ist bei der vorstehenden bekannten Verfahrensweise und Vorrichtung bereits vorgeschlagen worden, das Steuerventil als Cartridgeventil auszubilden, sowie das Hydraulikmedium vor dem Einspeisen in die Betätigungskammer der Kolbenzylindereinheit in einem Kraftspeicher unter Druck zu setzen.

### Darstellung der Erfindung

Der Erfindung liegt die Aufgabe zugrunde, eine eingangs geschilderte Vorrichtung derart weiterzubilden, dass bei möglichst einfachem, technischem Aufbau eine möglichst schnelle Übertragung der Arbeitskraft auf ein Werkstück realisiert werden kann.

Diese Aufgabe wird gelöst durch eine Vorrichtung mit einem Arbeitszylinder, einem Arbeitskolben, einer mit einem Hydraulikmedium beaufschlagbaren, auf einer Seite des Kolbens befindlichen Betätigungskammer, einer mit einem gasförmigen Medium beaufschlagbaren, auf der entgegengesetzten Seite des Kolbens befindlichen Rückführungskammer und einer mit dem Arbeitskolben zusammenwirkenden Kraftübertragungseinrichtung.

Der Erfindung liegt der Gedanke zugrunde, dass das in der Technik übliche in die Rückführungskammer einspeisbare Hydraulikmedium durch ein gasförmiges Medium ersetzt werden kann. Die Verwendung eines gasförmigen Mediums zur Beaufschlagung der Rückführungskammer bietet den Vorteil, dass der Widerstand beim Verdrängen des Mediums aus der Rückführungskammer während des Kraftübertragungsvorgangs reduziert werden kann. Dies hat den Vorteil, dass eine noch schlagartiger ablaufende Arbeitsweise und damit noch wirkungsvollere Übertragung der Arbeitskraft auf ein Werkstück erzielt werden kann.

Vorteilhafte Ausführungsformen sind durch die Ansprüche 2-6 gekennzeichnet.

So steht ein Kraftspeicher mit der Betätigungskammer in Verbindung, sodass das in die Betätigungskammer einspeisbare Hydraulikmedium in dem Kraftspeicher unter Druck speicherbar ist. Diese Ausführungsform besitzt den Vorteil, die Arbeitsweise der Vorrichtung derart schnell zu gestalten, dass eine möglichst schlagartig ablaufende Arbeitsweise erzielt werden kann. Als Kraftspeicher kann ein solcher zum Einsatz kommen, der einen Hochdruckbehälter umfasst, dessen Innenraum über eine Trennmembran in zwei Kammern unterteilt ist, von denen die untere Kammer mit Hydraulikmedium und die obere Kammer mit einem Druckgas, vorzugsweise Stickstoff gefüllt ist.

Nach einer vorteilhaften Ausführungsform ist zwischen dem Kraftspeicher und der Betätigungskammer ein Steuerventil angeordnet, wobei das im Kraftspeicher unter Druck gespeicherte Hydraulikmedium über das Steuerventil schlagartig in die Betätigungskammer einspeisbar ist. Ein derartiges Steuerventil kann in jeder beliebigen Weise ausgestaltet sein. Wesentlich ist lediglich, dass das Steuerventil derart konzipiert ist, dass innerhalb einer kurzen Zeitspanne, d.h. schlagartig ein relativ großer Durchströmquerschnitt für das Hydraulikmedium zur Verfügung steht, damit das im Kraftspeicher gespeicherte Hydraulikmedium möglichst schlagartig in die Betätigungskammer eingespeist werden kann. Vorteilhaft ist es deshalb, wenn als Steuerventil ein sogenanntes Zwei-Wege-Einbauventil eingesetzt wird. Derartige Ventile werden in der Fachwelt häufig auch als Cartridgeventile bezeichnet.

Nach einer bevorzugten Ausführungsform handelt es sich bei dem Werkstück um ein Pleuel und die Kraftübertragungseinrichtung ist derart gestaltet, dass das Pleuel bruchtrennbar ist. Dies hat den Vorteil, dass bei möglichst einfachem, technischem Aufbau ein möglichst schneller Bruchtrenn-Vorgang realisiert werden kann. Des Weiteren wird durch diese Arbeitsweise beim Bruchtrenn-Vorgang eine relativ geringe plastische Verformung des Pleuelmaterials im Bereich der Bruchebene sichergestellt, die einem sogenannten Sprödbruch sehr nahe kommt.

Nach einer weiteren Ausführungsform umfasst die Kraftübertragungseinrichtung einen ortsfesten Spreizbacken, einen beweglichen Spreizbacken, sowie eine Spreizeinrichtung in Form eines Spreizkeils zum Auseinanderdrücken der Spreizbacken.

Vorteilhafterweise umfasst die Rückführungskammer zusätzlich eine Ablassvorrichtung, sodass das gasförmige Medium aus der Rückführungskammer schlagartig verdrängbar ist. Eine derartige Ablassvorrichtung kann beispielsweise als Abflussventil mit einem großen Steuerquerschnitt ausgebildet sein, sodass dem unter Druck in die Betätigungskammer eingespeisten Hydraulikmedium auf Seite der Rückführungskammer ein möglichst geringer Gegendruck entgegenwirkt. Vorteilhaft ist es in diesem Zusammenhang, wenn die Steuerung derart gestaltet ist, dass die Ablassvorrichtung bereits geöffnet ist, wenn das unter Druck stehende Hydraulikmedium in die Betätigungskammer eingespeist wird.

Nachfolgend wird die Erfindung rein beispielhaft anhand der beigefügten Figuren beschrieben:
- Fig. 1: zeigt schematisch ein erstes Ausführungsbeispiel einer erfindungsgemäßen Vorrichtung in einer vereinfachten Gesamtansicht;
- Fig. 2: zeigt in vergrößertem Maßstab eine teilweise geschnittene Ansicht eines Teiles des in Fig. 1 dargestellten Ausführungsbeispiels;
- Fig. 3: zeigt schematisch ein Hydraulikschema wie es dem ersten Ausführungsbeispiel der erfindungsgemäßen Vorrichtung zugrunde liegt.

### Wege zur Ausführung der Erfindung:

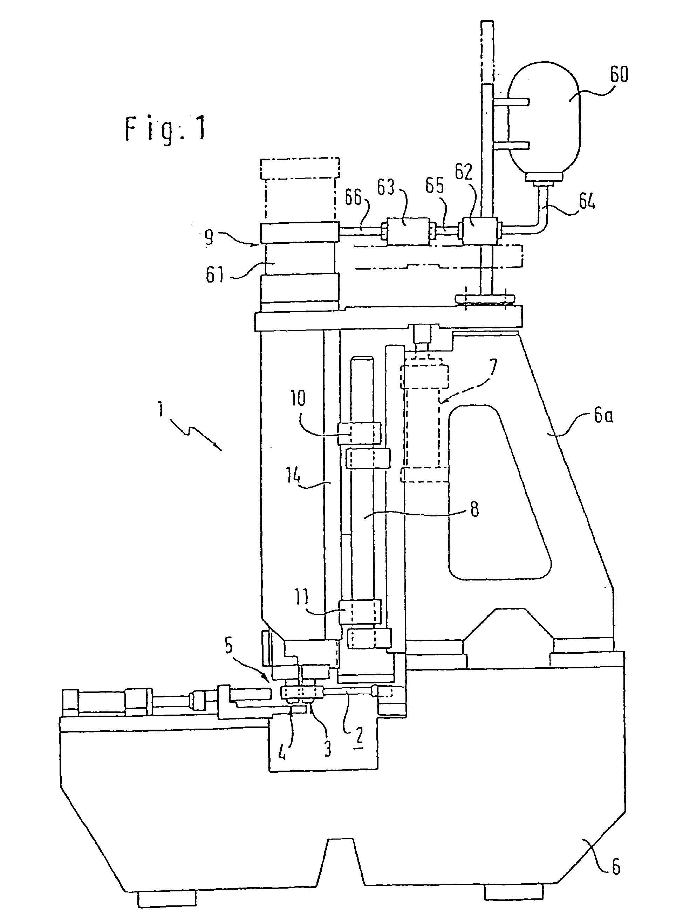

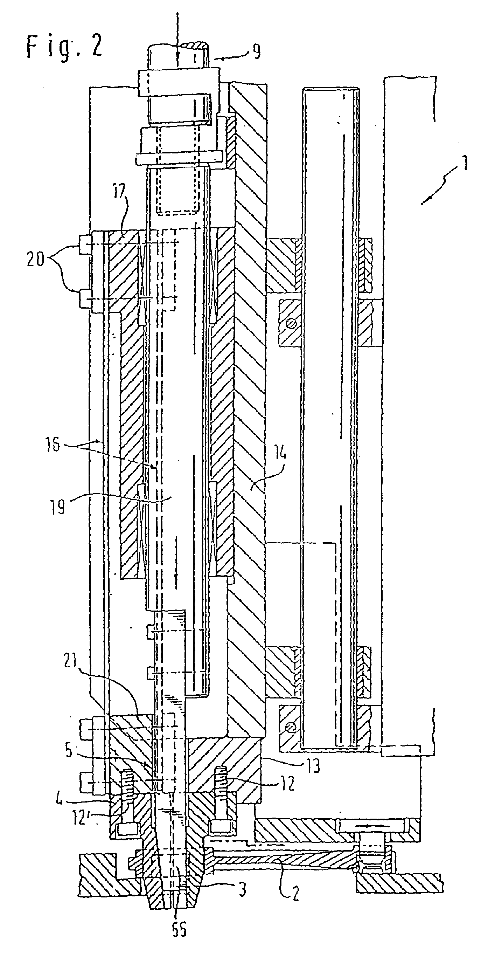

Das in Fig. 1 dargestellte erste Ausführungsbeispiel einer erfindungsgemäßen Vorrichtung 1 ist auf einem Ständerunterteil 6 aufgebaut, wie es bei Transferstraßen zum Einsatz kommt. Auf das Ständerunterteil 6 ist ein rahmenartiges Ständeroberteil 6a aufgesetzt, das eine Führungsanordnung 8 in Form einer vertikalen Geradführung trägt. An der vertikalen Geradführung ist über Führungslaschen 10 und 11 ein beweglicher Rahmen 14 gelagert, der über eine am Ständeroberteil 6a befestigte Hubvorrichtung 7 anhebbar bzw. absenkbar ist. Der bewegliche Rahmen 14 wiederum trägt eine Kraftübertragungseinrichtung 5, die einen ortsfesten, d.h. am beweglichen Rahmen 14 unmittelbar befestigten Spreizbacken 3 sowie einen beweglichen Spreizbacken 4 trägt. Des Weiteren umfasst diese Kraftübertragungseinrichtung 5 einen in Fig. 2 dargestellten Spreizkeil 55.

Die Anordnung ist derart getroffen, dass der ortsfeste und der bewegliche Spreizbacken der Spreizeinrichtung 5 über die Hubeinrichtung 7 und den beweglichen Rahmen 14 in das große Auge eines in einer Halterung auf dem Ständeroberteil angeordneten, aus Kappe und Stange bestehenden Pleuels 2 von oben eingesenkt bzw. aus diesem wieder herausgezogen werden kann.

Der genaue Aufbau der Kraftübertragungseinrichtung ergibt sich aus Fig. 2. Demnach ist aus Fig. 2 erkennbar, dass der ortsfeste Spreizbacken 3 über Befestigungsschrauben 12 an einem Befestigungssockel 13 des beweglichen Rahmen 14 befestigt ist. Der bewegliche Spreizbacken 4 wiederum ist über Befestigungsschrauben 12' an einem Lagerabschnitt 21 befestigt, der über eine Parallellenkeranordnung 16 über Befestigungsschrauben 20 an einem Halterabschnitt 17 befestigt ist, der einen Teil des beweglichen Rahmens 14 darstellt. Zwischen dem ortsfesten Spreizbacken 3 und dem beweglichen Spreizbacken 4 ist der Spreizkeil 55 angeordnet, der mit einer Schubstange 19 verbunden ist, die mit dem Arbeitskolben 9 zusammenwirkt. Der übrige Aufbau des ersten Ausführungsbeispieles der erfindungsgemäßen Vorrichtung, wie sie in Fig. 2 dargestellt ist, ist in dem deutschen Gebrauchsmuster 92 10 197 beschrieben, auf dessen Offenbarungsgehalt hier ausdrücklich Bezug genommen ist.

Die Kolbenzylindereinheit 61, in Fig. 1 dargestellt, umfasst einen Kolben 9 der über eine Schubstange 19 mit einem Spreizkeil 55 verbunden ist. Zwischen dem Kraftspeicher 60 und der Kolbenzylindereinheit 61 sind eine Sicherheitseinrichtung 62 und ein Steuerventil 63 angeordnet. Die Sicherheitseinrichtung 62 und das Steuerventil 63 sind untereinander sowie gegenüber dem Kraftspeicher 60 und der Kolbenzylindereinheit 61 mit möglichst kurz bemessenen Verbindungsleitungen 64, 65 und 66 mit geringem hydraulischen Widerstand verbunden.

Die Sicherheitseinrichtung 62 stellt eine handelsübliche Einheit dar, die ein Absperrventil und ein Überdruckventil aufweist.

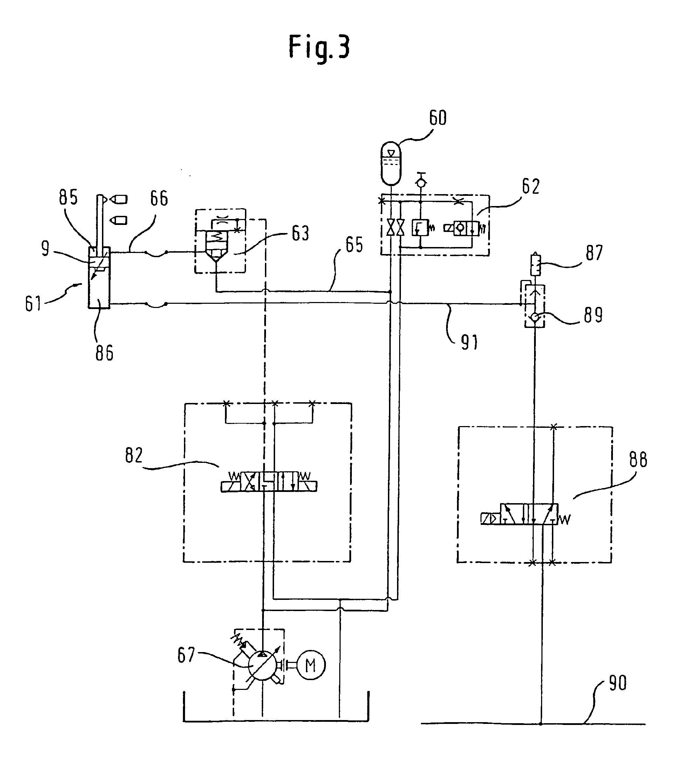

Das in Fig. 3 dargestellte Hydraulikschema, welches dem ersten Ausführungsbeispiel zugrunde liegt, zeigt eine Kolbenzylindereinheit 61 mit einem Kolben 9, der die Kolbenzylindereinheit 61 in eine Betätigungskammer 85 und eine Rückführungskammer 86 teilt. Das Hydraulikschema zeigt ferner den Kraftspeicher 60, der mit der Sicherheitseinheit 62 in Verbindung steht, die in bekannter Weise ein Absperrventil und ein Überdruckventil aufweist.

Mit der Sicherheitseinrichtung 62 ist über eine Leitung 65 das Steuerventil 63 verbunden, welches seinerseits über die Leitung 66 mit der Betätigungskammer 85 in Verbindung steht.

Wie aus Fig. 3 erkennbar, umfasst die Anordnung ferner eine Hauptpumpe 67, mit der ein Hydraulikmedium zum Aufbau einer Speicherkraft über die Leitung 65 und die Sicherheitseinrichtung 62 in den Kraftspeicher 60 eingespeist werden kann.

Die Anordnung enthält darüber hinaus ein Wegeventil 82, mit dem das Steuerventil 63 gesteuert werden kann.

Ferner zeigt das Hydraulikschema eine Druckluftleitung 90, die durch die Leitung 91 über ein Wegeventil 88 und ein Rückschlagventil 89 mit der Rückführungskammer 86 verbunden ist. Des Weiteren ist zwischen dem Wegeventil 88 und der Rückführungskammer 86 eine Ablassvorrichtung 87 vorgesehen.

Der Vorgang läuft nun wie folgt ab: Zuerst wird der Kraftspeicher 60 über die Hauptpumpe 67 auf seinen Betriebsdruck gebracht. Im Anschluss daran öffnet das Wegeventil 82 das Steuerventil 63. Vor oder zeitgleich zu diesem Vorgang wird die Ablassvorrichtung 87 geöffnet. Da das Steuerventil 63 derart gestaltet ist, dass es innerhalb einer sehr kurzen Zeitspanne einen relativ großen DurchströmQuerschnitt freigibt, kann das im Kraftspeicher 60 gespeicherte Hydraulikmedium über die Leitungen 64, 65 und 66 schlagartig in die Betätigungskammer 85 der Kolbenzylindereinheit 61 fließen und damit schlagartig eine Kraft auf eine erste Seite des Kolbens 9 übertragen, welcher wiederum mit der Kraftübertragungseinrichtung 5 zusammenwirkt. Da die Ablassvorrichtung 87 geöffnet ist, wird dieser Bewegung des Kolbens 9 kein nennenswerter Widerstand entgegengesetzt, sodass die freiwerdende Kraft direkt und schlagartig über die Kraftübertragungseinrichtung übertragen werden kann.

Ist der Kraftübertragungsvorgang abgeschlossen, so öffnet das Wegeventil 82 eine Ablassvorrichtung der Betätigungskammer und zeitgleich öffnet das Wegeventil 88 die Verbindung der Rückführungskammer 86 mit einer Druckluftleitung 90. Die unter Druck eingespeiste Luft überträgt eine Kraft auf eine zweite Seite des Kolbens 9. Dadurch stellt sich der Kolben 9 in seine Ausgangsstellung zurück und der Kraftübertragungsvorgang auf das Werkstück kann erneut durchgeführt werden.

Auf diese Weise läuft der Kraftübertragungsvorgang derart schnell ab, dass eine Arbeitsweise gewährleistet ist, die einer mit Schlagmasse arbeitenden Vorrichtung sehr nahe kommt. Es wird deshalb mit Vorrichtungen der erfindungsgemäßen Art ein hinsichtlich der Qualität hochwertiges Kraftübertragungsergebnis mit relativ geringem technischen Aufwand erreicht.

## Patentansprüche

1. Vorrichtung zum Aufbringen einer Arbeitskraft auf ein Werkstück mit
einem Arbeitszylinder,
einem Arbeitskolben (9),
einer mit einem Hydraulikmedium beaufschlagbaren, auf einer Seite des Kolbens befindlichen Betätigüngskammer (85); und
einer mit dem Arbeitskolben (9) zusammenwirkenden Kraftübertragungseinrichtung (5);
**gekennzeichnet durch**
eine mit einem gasförmigen Medium beaufschlagbare, auf der entgegengesetzten Seite des Kolbens befindliche Rückführungskammer (86).

2. Vorrichtung nach Anspruch 1, **dadurch gekennzeichnet, dass**
ein Kraftspeicher (60) mit der Betätigungskammer (85) in Verbindung steht, wobei das Hydraulikmedium in dem Kraftspeicher (60) unter Druck speicherbar ist.

3. Vorrichtung nach Anspruch 2, **dadurch gekennzeichnet, dass**
zwischen dem Kraftspeicher (60) und der Betätigungskammer (85) ein Steuerventil (63) angeordnet ist, wobei das im Kraftspeicher (60) unter Druck gespeicherte Hydraulikmedium über das Steuerventil (63) schlagartig in die Betätigungskammer (85) einspeisbar ist.

4. Vorrichtung nach den Ansprüchen 1 bis 3, **dadurch gekennzeichnet, dass**
das Werkstück ein Pleuel (2) ist, und die Kraftübertragungseinrichtung (5) derart gestaltet ist, dass das Werkstück (2) bruchtrennbar ist.

5. Vorrichtung nach Anspruch 4, **dadurch gekennzeichnet, dass**
die Kraftübertragungseinrichtung (5) einen ortsfesten Spreizbacken (3), einen beweglichen Spreizbacken (4), sowie eine Spreizeinrichtung in Form eines Spreizkeils (55) zum Auseinanderdrücken der Spreizbacken (3,4) umfasst.

6. Vorrichtung nach den Ansprüchen 1 bis 5, **dadurch gekennzeichnet, dass**
die Rückführungskammer (86) eine derart gestaltete Ablassvorrichtung (87) umfasst, dass das gasförmige Medium aus der Rückführungskammer (86) schlagartig verdrängbar ist.

## Claims

1. Device for applying a working power to a workpiece, comprising
a working cylinder,
a working piston (9),
an actuating chamber (85) which can be supplied with a hydraulic medium and situated on one side of the piston, and a force transmitting device (5) cooperating with the working piston (9),
**characterised by** a return chamber (86), which can be supplied with a gaseous medium, situated on the opposite side of the piston.

2. Device according to claim 1, **characterised in that** the accumulator (60) communicates with the actuating chamber (85), wherein the hydraulic medium may be stored in the accumulator (60) under pressure.

3. Device according to claim 2, **characterised in that** arranged between the accumulator (60) and the actuating chamber (85) is a control valve (63), wherein the hydraulic medium stored in the accumulator (60) under pressure may be fed instantaneously via the control valve (63) into the actuating chamber (85).

4. Device according to claims 1 to 3, **characterised in that** the workpiece is a connecting rod (2) and the force transmitting device (5) is designed such that the workpiece (2) can be crack split.

5. Device according to claim 4, **characterised in that** the force transmitting device (5) has a locally fixed spreading jaw (3), a movable spreading jaw (4) and a spreading device in the form of a spreading wedge (55) for pushing apart the spreading jaws (3, 4).

6. Device according to claims 1 to 5, **characterised in that** the return chamber (86) includes a discharge device (87) designed such that the gaseous medium may be displaced instantaneously from the return chamber (86).

## Revendications

1. Dispositif pour appliquer une force de travail à une pièce à usiner avec
un cylindre de travail,
un piston de travail (9),
une chambre d'actionnement (85) pouvant être alimentée avec un milieu hydraulique, située d'un côté du piston ; et
un dispositif de transmission de force (5) coopérant avec le piston de travail (9) ;
**caractérisé par**
une chambre de recirculation (86) pouvant être alimentée avec un milieu gazeux, située du côté opposé du piston.

2. Dispositif selon la revendication 1, **caractérisé en ce que**
un accumulateur de force (60) communique avec la chambre d'actionnement (85), le milieu hydraulique pouvant être accumulé sous pression dans l'accumulateur de force (60).

3. Dispositif selon la revendication 2, **caractérisé en ce que**
une valve de commande (63) est agencée entre l'accumulateur de force (60) et la chambre d'actionnement (85), le milieu hydraulique accumulé sous pression dans l'accumulateur de force (60) pouvant être injecté brusquement dans la chambre d'actionnement (85) par le biais de la valve de commande (63).

4. Dispositif selon les revendications 1 à 3, **caractérisé en ce que**
la pièce à usiner est une bielle (2) et le dispositif de transmission de force (5) est réalisé de telle sorte que la pièce à usiner (2) peut être sectionnée par rupture.

5. Dispositif selon la revendication 4, **caractérisé en ce que**
le dispositif de transmission de force (5) présente une mâchoire d'écartement fixe (3), une mâchoire d'écartement mobile (4), ainsi qu'un dispositif d'écartement sous forme de cale d'écartement (55) servant à écarter les mâchoires d'écartement (3, 4).

6. Dispositif selon les revendications 1 à 5, **caractérisé en ce que**
la chambre de recirculation (86) comprend un dispositif de décharge (87) réalisé de telle sorte que le milieu gazeux peut être chassé brusquement de la chambre de recirculation (86).
